# EUROPEAN PATENT APPLICATION

(11) **EP 2 081 112 A2**
(43) Date of publication of application: **22.07.2009**
(21) Application number: 09150774.9
(22) Date of filing: 16.01.2009
(51) Int. Cl.: G06F 3/147

(54) **Arrangement for indicating abnormal states on information display units**

(30) Priority: 17.01.2008 US 7967
(71) Applicant: MariSense Oy, 01450 Vantaa (FI)
(72) Inventor: Wright, Gregory Alan, Fair Haven, NJ 07704 (US)
(74) Representative: Laine, Terho Tapio

(57) **Abstract**

This invention relates to an arrangement for indicating an abnormal state like a low supply voltage in display units (5a,5b) that display information, which display units (5a,5b) consist at least of a display driver (14) and a display (3), which display (3) consists at least of display segments (12) and a background (13), the colour of which components can be changed using an electrical current controlled by the display driver (14). The arrangement includes switching devices (16) for indicating an abnormal state on the display (3) by inverting the colours.

## Description

This invention relates to an arrangement for indicating abnormal states on information display units, as described in the introductory section of patent claim 1.

The arrangement in accordance with this invention can be applied to various kinds of display units fitted with electronic displays, intended to display information. Such units include ones which display price information or other product-related information in shops and warehouses.

In known technology, the price information on supermarket labels is changed manually whenever prices change. New prices are printed out on paper or a similar material and small labels are placed manually in slots reserved for them on the shelves in the shop space. This method involves first finding the correct place for the updated price label, and then removing the old label and destroying it. One problem with this solution is that it is labour-intensive and prone to human error. It also leaves the system open to conflicts between prices on the shelves and prices stored in the scanners at checkouts.

To solve these problems, electronic systems have been developed in which small electronic display units and displays are placed at the front of shelves or above them. These display price information which can be updated from a centralised system control panel or similar device. This makes the updating of price information considerably easier and quicker. Depending on the system, the information can be updated wirelessly or across wires. Wired systems are problematic in that wires for information transfer and possibly power supply must be led to each display. When there are lots of displays, there have to be lots of wires, which causes problems and layout restrictions. Wireless systems do not require complex wiring. They do, however, require aerials and separate power supplies, which could be ordinary batteries. Large stores might be equipped with thousands of such displays. One problem with battery-equipped displays is how to identify displays where the voltage in the power supply is running low and should soon be changed. Notifications of these kinds of abnormal situations should be made clearly, so that it is easy for store staff to notice displays which are in an abnormal state. This would reduce the time and effort spent on finding displays in an abnormal state. Another possible abnormal state is a reduced price, which should be indicated easily and reliably on the correct displays. Systems in which the above kids of abnormal states are indicated sufficiently clearly are not known to exist.

The aim of this invention is to remove the abovementioned problems and to achieve an affordable, simple and reliable arrangement for indicating the kinds of abnormal states mentioned earlier on electronic information displays in a clear manner. The arrangement in accordance with the invention is characterised by that which is described in the characteristics section of patent claim 1. The characteristics of other applications of the invention are described in the other patent claims.

A benefit associated with the arrangement in accordance with the invention is that abnormal states can be indicated automatically and very clearly so that store staff and customers can identify displays which are in an abnormal state from fairly far away. Then staff will know to change low batteries in time and, similarly, customers can identify products which are being sold at special prices. Another benefit is that the abnormal state can be displayed clearly without changing the original information shown on the display. A further benefit is that the arrangement is simple and affordable to implement.

Below, the invention is described in detail using an application example, by referring to the appended figures, in which
- Figure 1: shows the arrangement in accordance with the invention, placed in a supermarket or similar sale environment, in diagrammatic and simplified form.
- Figure 2: shows a display unit which is using the arrangement in accordance with the invention, depicted from a diagonal frontal position.
- Figure 3: shows a display unit which is using the arrangement in accordance with the invention, depicted from a sideways position.
- Figure 4: shows a display unit in a normal state, depicted from the front.
- Figure 5: shows a display unit in an abnormal state, depicted from the front.

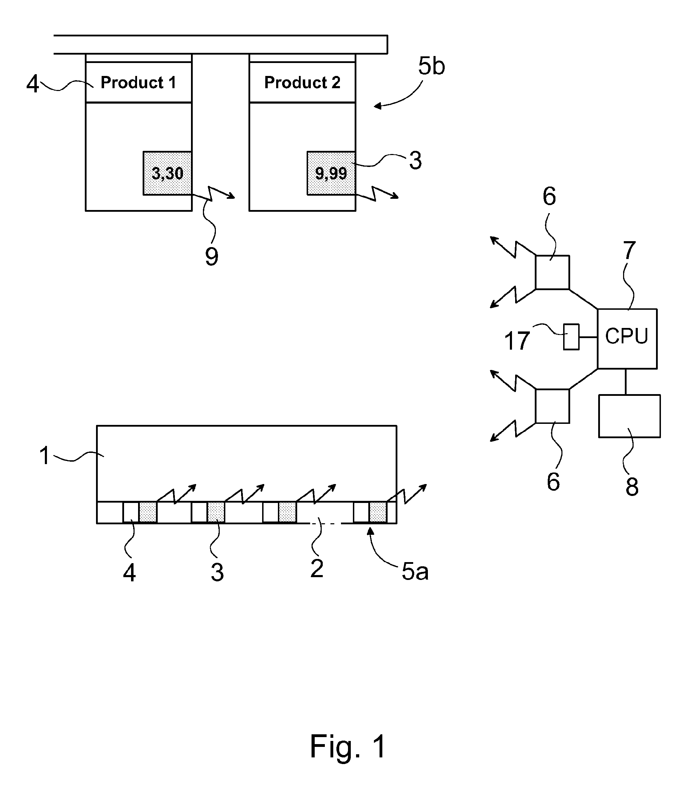

Figure 1 shows the arrangement in accordance with the invention, placed in a supermarket or similar sale environment, in diagrammatic and simplified form. Shelves (1) are equipped with shelf rails (2), inside which display units (5a) equipped with electrophoretic laminate displays (3) and product information (4) are placed in locations corresponding to the products on the shelves. The laminate display (3) is arranged to display the price of the product. The product information (4) includes the name of the product and possibly other related data. Display units (5b) in the shape of display pockets are hung at the necessary spots in the sale environment, which display units also include an electrophoretic laminate display (3) and some product information (4). Each laminate display (3), hereafter referred to as a display (3), forms a thin price label, similar in appearance to a paper label, equipped with display segments, on which the necessary product price information and other markings are displayed by changing the colour of the essentially dichromatic display segments. One layer of the display could be an active ink layer which uses known technology. The ink layer has several liquid-filled microcapsules containing e.g. positively surface charged, essentially black particles, and negatively surface charged, essentially white particles, whose placement within the microcapsules is controlled with an electric field such that for the desired display segments the black particles are at the top - in which case the display segments look black when viewed from above - while for other display segments the white particles are at the top - in which case the display segments appear lighter in colour. The background of the display consists of the same microcapsules, so for instance price data can be displayed as dark numbers against a light background or vice versa. Such a display could for instance be the electrophoretic microcapsule display laminate described in Finnish patent application FI 20050192.

The system also includes at least a control centre (7) equipped with a communicating device (6) such as a radio, infrared, bluetooth or similar transmitter, through which the data to be updated are sent to the displays (3). In addition, the scanners (8) which scan the price of each product at the checkouts can be connected to the system, which means that the same, up-to-date price information is contained in the scanners and on the display units. The control centre (7) can also be connected to other control and support systems. The wireless connection between the control centre (7) and the display units (5a, 5b) is described with arrows (9).

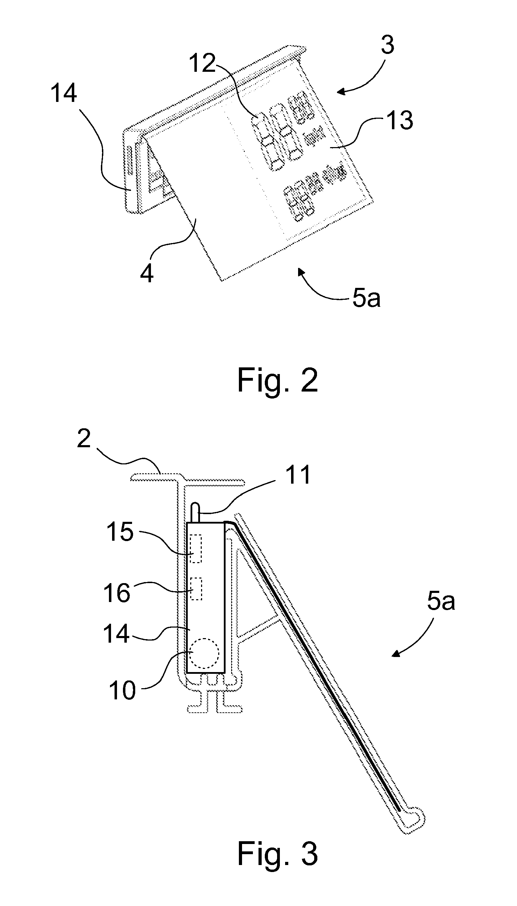

Figures 2 and 3 show a more detailed example of what a display unit (5a) attached to a shelf fail (2) could be like. At the back, the display unit (5a) is connected to a display driver (14), linked to the display (3), as well as to a receiver (11) equipped with an aerial and to a power supply (10), which could be an ordinary battery. The power supply (10) is arranged to transmit power to the display unit (5a) and to its display driver (14). With the use of the receiver (11) and the display driver (14), the price or other information shown on the display (3) is updated wirelessly from a central unit (7). In this application example, update and control information is transferred using radio waves, but other transfer methods are also applicable. Each display laminate (3) forms a thin price label, similar in appearance to a paper label, equipped with display segments (12) on which the necessary product price information and other markings are displayed by changing the colour of the essentially dichromatic display segments (12). The colour of the display segments (12) and the background (13) is changed using an electrical current to form a charged field, as described above.

In the arrangement, measuring instruments (15) are placed close to each display unit (5a, 5b), for instance in the display driver (12), to gauge the voltage left in the battery used as the display's power supply (10). In addition, there are devices (16) for indicating an abnormal state, that invert the colours of the display when the voltage in the battery used as the display's power supply (10) goes below a set limit value. The abnormal state switching devices (16) should optimally be placed close to each display unit (5a, 5b), for instance in the display driver (12), but they can also be placed elsewhere in the arrangement. Further, the central unit (7) contains control devices (17) for controlling the abnormal state switching devices (16) from the central unit (7), which means that the display (3) can also be used to display other information than a decrease in battery voltage. Thus, products which are on sale or special offer can be identified with an inverted display, controlled from the central unit (7), which makes it easy for customers to see when a product is reduced. Further, the central unit (7) has a function that increases effectiveness by causing the display to flash so that it alternates between normal and inverted colours. The flashing function can also be implemented so that the colours of the display segments (12) and the background (13) alternate between being the same colour and inverted colours, so that the display appears to be off on every other flash. The arrangement can also be implemented so that the colours of the display (3) can be controlled with the central unit's (7) control devices (17), without using the abnormal state switching devices (16).

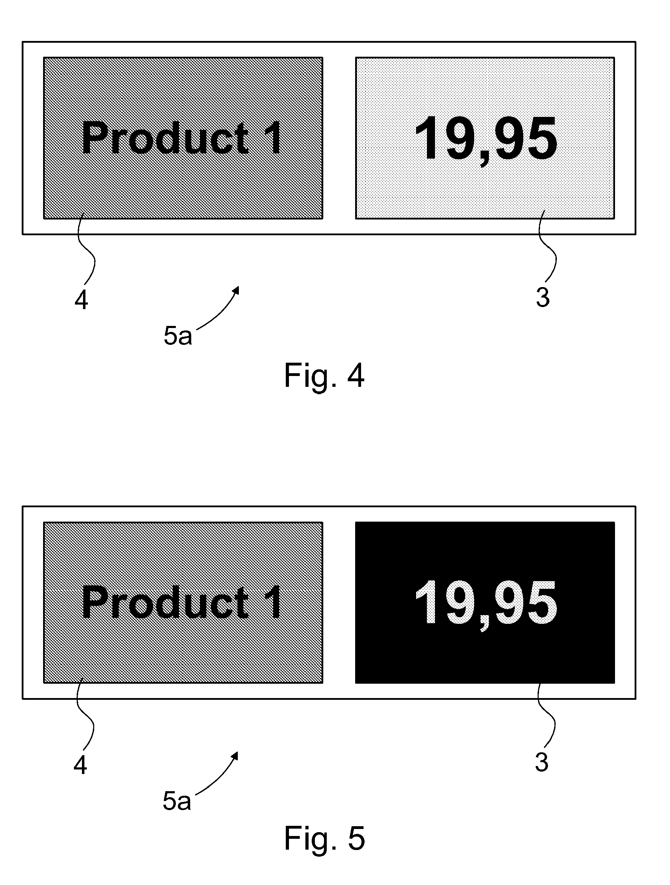

Figure 4 shows a display unit (5a) in a normal state, with its display laminates (3) and its product information (4), depicted from the front. A current has been conducted to the microcapsules that form the display segments and background of the display (3) on the display unit (5a) such that the desired price is displayed in a darker colour and the background is in a lighter colour.

Figure 5 shows a display unit (5a) in an abnormal state, with its display laminates (3) and its product information (4), depicted from the front. The opposite current from Figure 4 has been conducted to the microcapsules that form the display segments and background of the display (3) on the display unit (5a), such that the desired price is displayed in a lighter colour and the background is darker. This means that the colours of the display (3) are inverted in comparison to the situation in Figure 4. An inverted display is easy to notice in a shop, which means that staff find it easy to identify displays that are in an abnormal state.

Those skilled in the art will clearly see that the invention is not limited to the application examples given above, but can be varied within the scope of the patent claims given below. Thus the arrangement in accordance with the invention can be used in environments other than shops, such as for instance warehouses.

Those skilled in the art will also see that the invention does not have to be applied to a wireless system, but can just as well apply to a wired system, in which information transfer and possibly the power supply are carried out across wires connected to the displays.

Further, it is clear that the invention can be applied not only to black and white displays but to any dichromatic display, as well as to polychromatic displays.

## Claims

1. An arrangement for indicating an abnormal state in display units (5a, 5b) that display information, which display units (5a, 5b) consist at least of a display driver (14) and a display (3) connected to the driver (14), which display (3) consists at least of components forming display segments (12) and components forming a background (13), the colour of which components can be changed using an electrical current controlled by the display driver (14), **characterised in that** the arrangement includes at least switching devices (16) for indicating an abnormal state on the display (3).

2. An arrangement in accordance with patent claim 1, **characterised in that** the switching devices (16) are adapted to invert the colours of the display segments (12) and the background (13) to indicate an abnormal state.

3. An arrangement in accordance with patent claim 1, **characterised in that** it includes measuring instruments (15) for gauging the voltage left in the power supplies (11) of the display units (5a, 5b).

4. An arrangement in accordance with patent claim 3, **characterised in that** the switching devices (16) are adapted to invert the colours of the display segments (12) and the background (13) on the basis of information received from the measuring instruments (15) when the voltage in the power supply (11) goes below a set limit value.

5. An arrangement in accordance with patent claim 4, **characterised in that** the measuring instruments (15) are placed close to the display unit (5a, 5b).

6. An arrangement in accordance with patent claim 1, **characterised in that** the switching devices (16) are placed close to the display unit (5a, 5b).

7. An arrangement in accordance with patent claim 1, **characterised in that** it includes a central unit (7), to which the display units (5a, 5b) are connected wirelessly or with wires, which central unit (7) contains control devices (17) for controlling the switching devices (16) in the display units (5a, 5b) so that the colours of the display segments (12) and the background (13) can be inverted.

8. An arrangement in accordance with patent claim 1, **characterised in that** it includes a central unit (7), to which the display units (5a, 5b) are connected wirelessly or with wires, which central unit (7) contains control devices (17), **characterised in that** the control devices (17) are set to invert the colours of the display segments (12) and the background (13).

9. An arrangement in accordance with patent claim 8, **characterised in that** the control devices (17) have a function for flashing the colours of the display segments (12) and the background (13).

10. An arrangement in accordance with patent claim 9, **characterised in that** the function in the control devices (17) for flashing the colours of the display segments (12) and the background (13) is set to either alternate between the colours of the display segments (12) and the background (13) being the same and then different, or to invert the colours of the display segments (12) and the background (13) in the flashing rhythm.
